# FASCICULE DE BREVET EUROPEEN

(11) **EP 2 844 847 B1**
(45) Date de publication et mention de la délivrance du brevet: **27.07.2016**
(21) Numéro de dépôt: 13725409.0
(22) Date de dépôt: 02.05.2013
(51) Int. Cl.: B25B 21/00, F01D 5/06, B25B 13/48, F01D 25/28

(54) **OUTILLAGE ET PROCEDE DE DEVISSAGE AVANT D'UN ECROU DE LIAISON DANS UN TURBOREACTEUR A DOUBLE CORPS**
WERKZEUG UND VERFAHREN ZUM STIRNSEITIGEN LÖSEN EINER VERBINDUNGSMUTTER IN EINER DOPPELSPULENTURBINE
TOOL AND METHOD FOR FRONTAL UNSCREWING OF A LINK NUT IN A TWIN-SPOOL TURBINE

(30) Priorité: 02.05.2012 FR 1254028
(43) Date de publication de la demande: 11.03.2015
(73) Titulaire: SNECMA, 75015 Paris (FR)
(72) Inventeur: TAILPIED, Fabrice, F-77550 Moissy-Cramayel (FR); BERTIN, Michel, F-77550 Moissy-Cramayel (FR); COUTURE, Jean-Michel, F-77550 Moissy-Cramayel (FR); DAGRON, Hervé, F-77550 Moissy-Cramayel (FR); MANCHON, Roland, F-77550 Moissy-Cramayel (FR); MUSTIERE, Cédric, F-77550 Moissy-Cramayel (FR)
(74) Mandataire: Gevers & Orès
(86) Numéro de dépôt international: PCT/FR2013/050978
(87) Numéro de publication internationale: WO 2013/164551

(56) Documents cités:
- FR-A1- 2 824 362
- FR-A1- 2 857 708
- GB-A- 2 283 535
- US-A- 2 852 652

## Description

### DOMAINE TECHNIQUE DE L'INVENTION

La présente invention porte sur le démontage d'un moteur à turbine à gaz, notamment sur le démontage de l'écrou de liaison à un palier du rotor haute pression dans un turboréacteur à double corps et à soufflante avant.

### ETAT DE LA TECHNIQUE

Un turboréacteur à double corps et à soufflante avant comprend deux rotors coaxiaux supportés par des paliers logés dans les moyeux de deux éléments de carter structuraux : désignés dans le domaine carter intermédiaire et carter d'échappement. A l'avant du moteur, les paliers sont montés dans le carter intermédiaire et à l'arrière un ou plusieurs paliers sont logés dans le carter d'échappement. Dans un moteur tel que le CFM56, les ensembles tournants sont ainsi montés sur cinq paliers : trois à l'avant et deux à l'arrière. A l'avant, l'arbre de soufflante et l'arbre du rotor basse pression, BP, sont montés respectivement dans les deux premiers paliers. Le rotor haute pression, HP, est supporté par le palier N°3, en aval des deux premiers. A l'arrière, ce même rotor HP est supporté par un palier inter-arbre et l'arbre du rotor BP est supporté par un palier monté dans le moyeu du carter d'échappement.

Chaque moteur, après une période de fonctionnement, est envoyé à l'atelier pour une révision complète par exemple, où il est démonté entièrement et où chaque pièce est nettoyée, réparée ou bien remplacée le cas échéant. Le démontage comprend plusieurs étapes dont celle du module de turbine BP à l'arrière puis celle du module constitué par le corps HP. Le rotor du corps HP comprend un tourillon à l'amont qui est retenu dans le palier N°3 par un écrou de liaison qu'il faut dévisser. Cette opération présente en soi une certaine difficulté en raison de la position centrale de l'écrou dans le moteur et de la faible accessibilité de cette pièce. L'écrou de liaison est une pièce cylindrique, filetée, dont la fonction est d'immobiliser l'extrémité amont en forme de tourillon du rotor HP par rapport à la bague interne du roulement à billes du palier. Cet écrou comprend quatre dents découpées dans la paroi cylindrique, et situées dans le prolongement amont de la partie filetée.

La procédure standard passe par le démontage du module de turbine BP à l'arrière et l'extraction de l'arbre BP par l'arrière également. On accède à l'écrou de liaison par le passage central, libéré par l'arbre BP. Après mise en place d'un dispositif se substituant au palier qui a été enlevé et d'un tube de guidage, un outil de forme appropriée, pourvu de deux ergots escamotables en extrémité d'un tube cylindrique est introduit dans ce passage jusqu'au niveau de l'écrou puis les deux ergots sont déployés radialement de manière à ce qu'ils viennent en prise contre deux des quatre dents de l'écrou de liaison. Le rotor HP étant immobilisé en rotation par une cale, la rotation de l'outil autour de son axe permet le dévissage de l'écrou.

Cette opération est délicate dans la mesure où il ne faut pas endommager les dents de l'écrou ni déformer ce dernier. Les directives du constructeur de la machine prescrivent l'application d'un couple maximum dans ce but.

Si l'écrou de liaison ne peut être dévissé par ce moyen, la procédure consiste alors à démonter l'ensemble de la soufflante avec le compresseur basse pression pour avoir accès à l'écrou par l'avant du moteur. Une fois cet accès dégagé, un outil de forme appropriée est introduit le long de l'axe du moteur jusqu'à atteindre l'écrou de liaison. La tête de l'outil est adaptée à la forme de l'ensemble des dents de l'écrou ce qui permet d'appliquer un couple plus important que précédemment et augmenter les chances de parvenir à le desserrer.

Cependant, si l'écrou de liaison ne peut toujours être extrait par cette opération, il est alors nécessaire de le couper. On cherche à éviter la découpe de l'écrou qui est onéreuse, car non seulement il faut remplacer ce dernier mais les copeaux et la limaille produits risquent de venir polluer l'engrenage situé dans l'environnement immédiat ce qui impliquerait un démontage et un nettoyage de ces pièces. Cet engrenage, désigné IGB, a pour fonction d'entrainer le bras radial relié à la boîte d'engrenages, AGB, supportant les accessoires.

Avec l'augmentation de la durée ou du nombre de cycles de fonctionnement des moteurs, et l'utilisation de ceux-ci, le cas échéant, dans un environnement agressif, on constate que le démontage conduit maintenant plus souvent à la découpe de l'écrou en raison du grippage de l'écrou de liaison.

Le grippage de l'écrou de liaison est dû à plusieurs facteurs :
- Cokéfaction de la graisse résultant d'un échauffement de la pièce,
- Déformation de l'écrou au desserrage, due aux efforts de torsion générés par le dépassement de la limite du couple toléré,
- Oxydation des parties de l'écrou formant les pistes de centrage avec le tourillon et la bague interne du roulement du palier.

La demande de brevet FR 2 824 362 décrit des procédés de dévissage de l'écrou de liaison d'un rotor HP par l'avant de l'écrou et par l'arrière de l'écrou.

US 2 852 652 décrit un outil de dévissage selon le préambule de la revendication 1.

Le présent déposant s'est fixé comme objectif la mise au point d'un procédé de démontage d'un moteur, évitant autant que possible d'en venir à la découpe de l'écrou.

### EXPOSE DE L INVENTION

Le procédé de l'invention s'applique à un turboréacteur à double corps et double flux comprenant une soufflante avant, un carter intermédiaire, un module HP avec un rotor HP et un module de turbine BP. Le carter intermédiaire du moteur comprend en particulier un palier support du rotor HP, ce dernier étant retenu dans le palier par un écrou de liaison. Le procédé de démontage d'un tel moteur comporte plusieurs étapes avec, après avoir dégagé l'accès à l'écrou, une étape de chauffage préalable de l'écrou et l'introduction dans l'axe du moteur d'un outil de dévissage de celui-ci.

Un chauffage préalable à température modérée permet de ramollir les huiles cokéfiées collant ensemble le filetage de l'écrou de liaison à celui du tourillon et aussi de permettre une dilatation différentielle entre les éléments cylindriques en contact l'un avec l'autre et ajustés serrés. Après avoir déposé le module de turbine BP avec son arbre, on introduit un moyen de chauffage tubulaire dans l'espace central dégagé par le module de turbine BP, le long de l'axe du moteur, et on chauffe l'écrou par l'intérieur.

L'invention porte sur un procédé de dévissage selon la revendication 3 de l'écrou de liaison du rotor HP par l'avant du moteur ; il est caractérisé par le fait que le rotor HP étant calé en rotation, l'outil de dévissage avant comprenant une clé tubulaire pourvue de dents de forme complémentaire à celle des dents de l'écrou de liaison, un support pour la clé tubulaire est fixé sur le carter intermédiaire, la clé tubulaire est montée à rotation sur le support, et un couple de dévissage est appliqué sur ladite clé tubulaire.

Plus précisément, le module de turbine BP ayant été démonté préalablement, on cale en rotation le rotor HP par un élément tubulaire engagé dans l'espace libéré par le module BP. L'élément tubulaire est fixé à une extrémité au carter du module HP et à l'autre extrémité est rendu solidaire en rotation du rotor HP.

Par la solution de l'invention, on évite de prendre appui sur l'engrenage IGB situé à proximité et de risquer d'endommager les dents de ce dernier.

L'outillage de dévissage selon la revendication 1 pour la mise en oeuvre du procédé de l'invention comprend un support pour une clé tubulaire, comportant un fut cylindrique et quatre branches s'étendant en étoile depuis le fut, une clé tubulaire pourvue de dents montée de manière amovible dans le fut du support, la clé tubulaire étant verrouillée axialement par rapport au support, et un outil anti-rotation apte à bloquer le rotor contre tout mouvement de rotation autour de son axe.

Avantageusement, l'outil anti-rotation comprend un élément tubulaire pourvu de chevilles, ledit élément tubulaire étant apte à être introduit à l'intérieur du rotor HP pour immobiliser ledit rotor en rotation.

Par mesure de sécurité, on vérifie au préalable, au moyen d'une clé dynamométrique à cassure, calibrée au couple maximal toléré, si l'écrou de liaison n'est pas grippé.

### BREVE DESCRIPTION DES FIGURES

On décrit maintenant plus en détail le procédé de démontage de l'écrou de liaison selon une mise en oeuvre donnée à titre d'exemple non limitatif, la description étant faite en référence aux dessins joints en annexe et sur lesquels
La figure 1 est une représentation en coupe axiale d'un moteur auquel s'applique le procédé de l'invention ;
La figure 2 est une vue en demi coupe axiale montrant in situ l'écrou de liaison du rotor HP au palier avant et qu'il faut démonter ;
La figure 3 est une vue schématique de côté, du moteur en cours de démontage ;
Les figures 4 et 5 représentent un exemple de réalisation du dispositif de chauffage de l'écrou de liaison ;
Les figures 6, 7 et 8 représentent un exemple de réalisation du dispositif de dévissage de l'écrou de liaison par l'avant du moteur avec le support et la clé tubulaire
La figure 9 montre en vue isométrique l'outil de calage en rotation du rotor HP.

### DESCRIPTION DETAILLEE DE L INVENTION

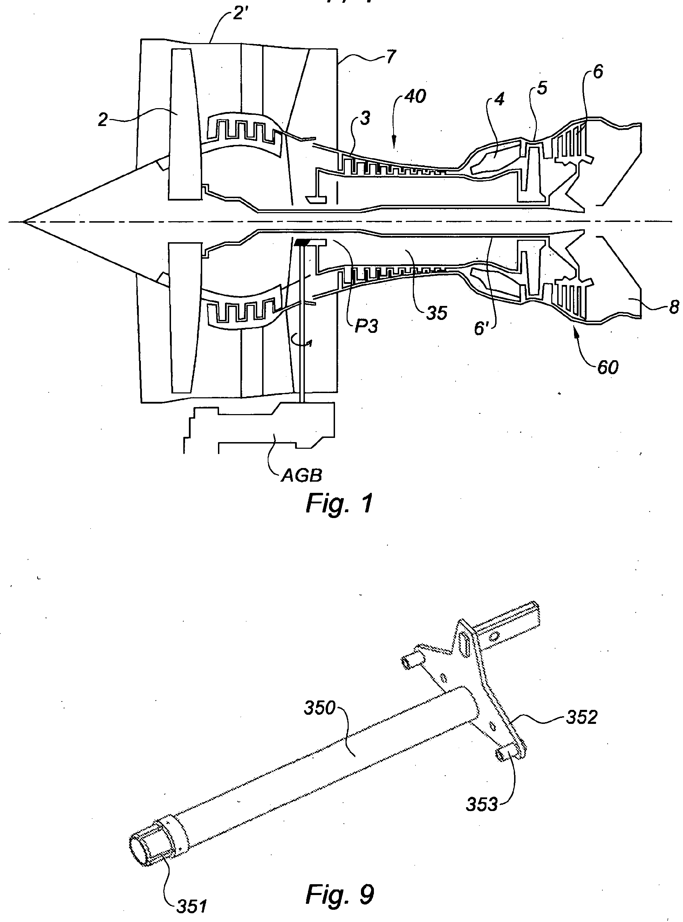

La coupe de la figure 1 représente un turboréacteur 1 à double corps et soufflante avant. De la droite vers la gauche de la figure, c'est-à-dire de l'amont vers l'aval dans le sens des flux gazeux, on distingue le rotor de la soufflante 2 à l'intérieur du carter de soufflante 2'. Le canal de soufflante délimité par le carter se divise en deux canaux annulaires concentriques, l'un pour le flux primaire traversant le moteur, l'autre pour le flux secondaire qui est éjecté sans avoir été réchauffé. Le flux primaire est comprimé dans le compresseur de gavage basse pression puis dans le compresseur HP 3. Il est admis dans la chambre de combustion 4 où il est chauffé par combustion d'un carburant. Les gaz chauds qui en sont issus sont distribués successivement dans la turbine HP 5 et la turbine BP 6 avant d'être éjectés. Les rotors sont supportés dans les deux carters structuraux que sont le carter intermédiaire 7 - auquel est fixé à l'amont le carter de soufflante - et le carter d'échappement 8 à l'arrière.

La soufflante 2 avec le compresseur de gavage et la turbine BP 6 sont reliés par un arbre de turbine BP 6'. L'arbre de turbine 6', la turbine 6 avec son carter forment avec le carter d'échappement 8, le module de turbine BP 60.

Le compresseur HP 3 et la turbine HP 5 forment le rotor HP 35 à l'intérieur du corps ou module HP 40. Celui-ci comprend également la chambre de combustion 4. Le rotor HP 35 est monté à l'amont dans le palier P3 qui est supporté dans le moyeu du carter intermédiaire 7. A ce niveau se trouve également la boite d'engrenages dite IGB pour l'entraînement de la boîte à engrenages des accessoires, dite AGB, par l'intermédiaire d'un arbre radial logé dans un bras du carter intermédiaire.

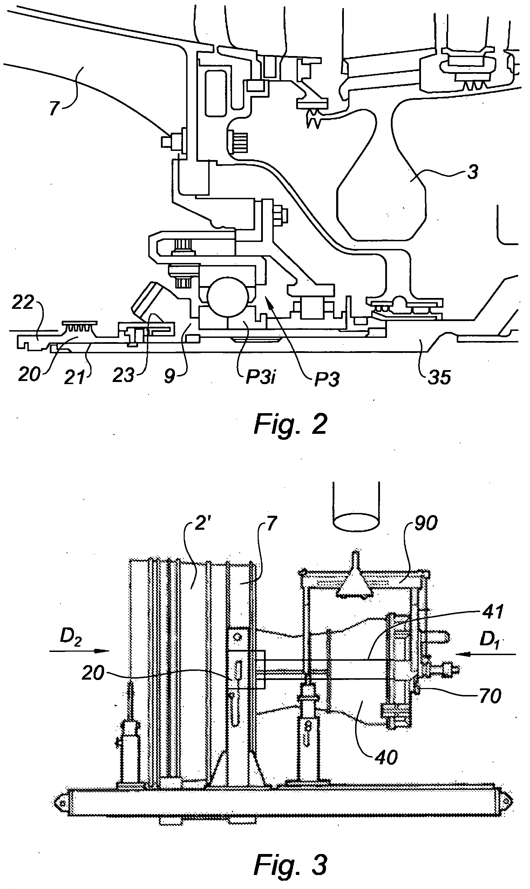

La figure 2 montre plus en détail cette partie du moteur ; l'extrémité amont du rotor 35 est logée dans la bague intérieure P3i du roulement du palier P3. Le corps cylindrique du pignon 9 de l'engrenage IGB est interposé entre le rotor et la bague P3i. L'écrou de liaison 20 est vissé en 21 à l'extrémité du rotor 35 et immobilise axialement ce dernier par rapport au carter intermédiaire 7. L'écrou de liaison 20 est ainsi une pièce cylindrique avec un filetage intérieur 21, une piste de centrage extérieure 23 et des dents 22 dans le prolongement axial vers l'amont de sa paroi cylindrique.

Le démontage du module HP 40 comprend la dépose préalable du module BP 60 pour libérer l'accès à l'écrou de liaison 20 et la mise en place d'un disque 70 de retenue du rotor HP dans son carter. Ce disque vient se substituer au palier inter-arbre aval qui a été enlevé avec le module BP 60. L'état du moteur est représenté schématiquement sur la figure 3. L'avant, carter de soufflante et carter intermédiaire 7, est fixé à un bâti et la partie arrière qui est à détacher du carter intermédiaire est le module HP 40. Il est accroché à une poutre 90 suspendue à un palan.

L'étape suivante consiste à introduire dans le tube de guidage 41 mis en place dans l'espace central libéré par l'arbre de la turbine BP, le moyen de chauffage 100 de l'écrou 20.

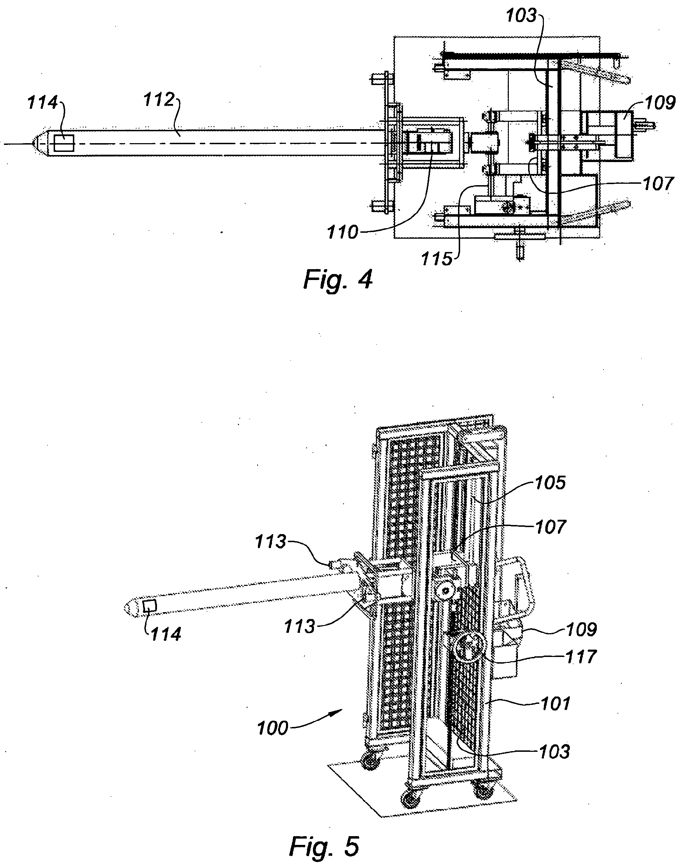

Ce moyen 100 est décrit ci-après en référence aux figures 4 et 5.

Il comprend un chariot 101 monté sur roulettes et avec une paroi verticale 103, pourvue de rails 105 verticaux guidant une plate forme 107 mobile verticalement. La plate forme est suspendue à un filin qui est relié par un jeu de poulies à un treuil 109 à commande manuelle permettant d'en régler la hauteur. La plateforme 107 supporte l'ensemble chauffant composé d'une chaufferette 110 et d'un tube creux 112. La chaufferette est disposée à l'extrémité proximale du tube pour produire un flux d'air chaud dans le tube 112 creux dirigé vers son autre extrémité. Celle-ci est ouverte latéralement avec des lumières 114 découpées dans la paroi du tube 112 autour de son axe. L'ensemble chauffant comprend aussi un moyen de repérage et de calage en position du tube lorsqu'il est introduit dans le moteur. Ce moyen est formé ici de deux saillies 113 sur une plaque transversale qui coopèrent avec des encoches correspondantes ménagées dans le disque de retenue 70.

L'ensemble chauffant est monté sur la plateforme par l'intermédiaire d'un axe 115 de rotation horizontal de manière à ce qu'on puisse l'orienter dans une position verticale de rangement, où il est escamoté dans le chariot, ou bien dans une position active, horizontale. La rotation de l'ensemble chauffant est commandée par un volant 117 disposé latéralement sur le chariot Un mécanisme approprié transmet le mouvement de rotation du volant à la rotation de l'ensemble chauffant autour de l'axe horizontal 115.

Pour chauffer l'écrou de liaison 20 on place le chariot face au moteur dans l'axe de celui-ci, L'élément de chauffage est ensuite mis à l'horizontale et introduit dans le tube de guidage 41 jusqu'à ce que les saillies 113 viennent en butée dans leur logement respectif ménagé dans le disque de retenue 70. L"extrémité du tube est alors à la hauteur de l'écrou On met la chaufferette en fonction et l'air chaud est insufflé au travers des lumières 114 du tube, en direction de l'écrou. On contrôle la montée en température de l'écrou, elle ne doit pas dépasser 130°C. Lorsque la température est atteinte, la chaufferette est désactivée et le chariot retiré et remisé.

On procède au chauffage de l'écrou 20.

La seconde étape vise le dévissage de l'écrou avec introduction de l'outillage par l'avant du moteur après avoir déposé la soufflante 2.

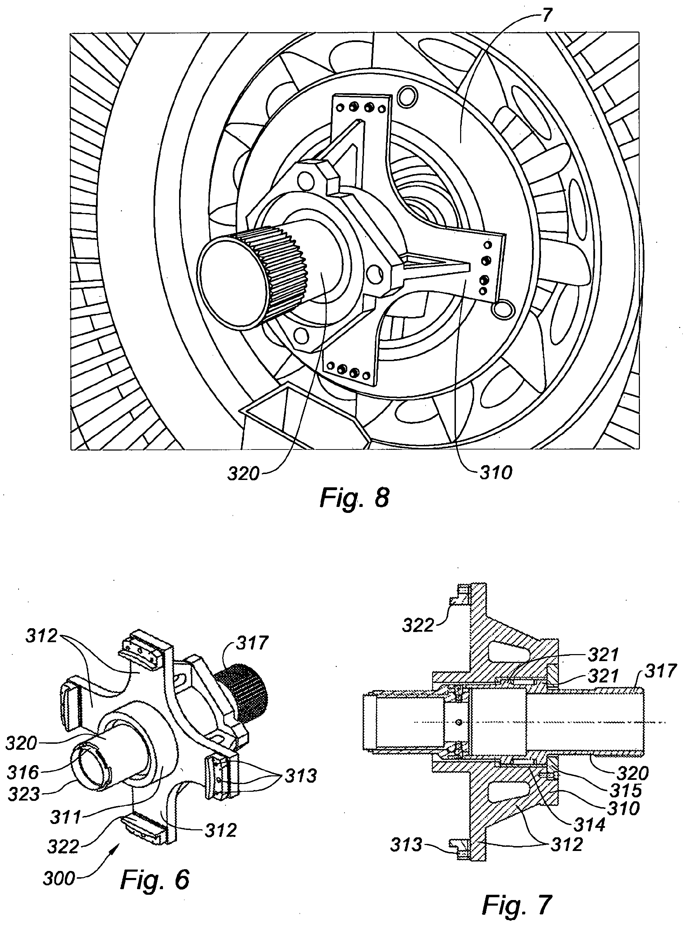

Ensuite, on met en place l'outil de dévissage avant 300 sur le moteur, figures 6, 7 et 8. L'outil comprend deux pièces principales : un support de clé 310, fixé au carter du moteur, et une clé tubulaire 320, pouvant tourner autour de son axe dans le support. Le montage est représenté sur la figure 8. Le support 310 comprend quatre branches 312 s'étendant en étoile depuis un fut cylindrique 311. Le support comprend des patins amovibles 322. L'opérateur monte les patins appropriés au type moteur lui permettant d'obtenir les bonnes interfaces de fixation sur le carter. Les branches et les patins 322 sont percés à leur extrémité de trous 313 pour le passage des vis de fixation au carter intermédiaire. La clé tubulaire 320 est logée dans le fut cylindrique de manière à être bloquée axialement mais peut tourner librement autour de son axe. La clé comprend deux portées circulaires 321 qui viennent se placer dans la bague correspondante 314. Un anneau 315 amovible ferme à l'amont l'espace de la rainure pour bloquer axialement la clé dans le support. La clé comprend à une extrémité quatre dents 316 de forme complémentaire à celle des dents 22 de l'écrou de liaison 20 et à son autre extrémité un pignon 317 pour son entraînement en rotation. La clé comprend aussi une bague mince 323 qui sert à repousser le frein de l'écrou 20 avant desserrage.

Une fois, l'outil 300 mis en place, un tube de calage 350, figure 9, est disposé à l'intérieur du rotor HP pour le caler en rotation. Ce tube comprend une plaque transversale avec des saillies 353 de repérage qui viennent en butée dans des encoches correspondantes dans le disque 70. A l'extrémité du tube sont placées des chevilles 351 qui coopèrent avec des rainures axiales du rotor HP pour assurer l'immobilisation de ce dernier.

Le mode opératoire comprend les étapes suivantes :
Chauffage de l'écrou de liaison au moyen du dispositif de chauffage 100 jusqu'à une température ne dépassant pas 130°C.
Montage du support 310 sur le carter intermédiaire et vissage des quatre branches aux orifices existants sur celui-ci.
Introduction de la clé de dévissage 320 dans le fut du support jusqu'à ce que l'extrémité dentée soit engagée entre les dents de l'écrou de liaison.
Verrouillage axial de la clé au moyen de l'anneau 315 sur le support.
Calage en rotation du rotor HP 35 par exemple au moyen d'un tube semblable au tube de dévissage par la turbine BP, pourvu de chevilles de calage.
Mise en place d'un multiplicateur d'effort sur le pignon 317, par exemple un appareil de type Sweeney.
Vérification que l'écrou de liaison peut être desserré par application d'un couple inférieur à la limite autorisée par le constructeur, au moyen d'une clé dynamométrique à cassure engagée dans le multiplicateur d'effort Sweeney.
Si la clé permet la rotation du pignon sans plier, alors l'écrou de liaison n'est pas grippé et on met en place un moteur pneumatique pour entraîner le pignon.
Si la clé dynamométrique indique que le couple maximum est dépassé, il faut envisager la découpe de l'écrou de liaison.

Le procédé de l'invention est ainsi une amélioration par rapport à la technique antérieure car on ne prend pas appui sur les dents du pignon de l'engrenage IGB. On élimine les risques d'endommagement des dents du pignon.

## Revendications

1. Outillage de dévissage apte à dévisser l'écrou de liaison du rotor d'un module de moteur à turbine à gaz, comprenant un support (310) pour une clé tubulaire (320) comportant un fut cylindrique (311) et quatre branches (312) s'étendant en étoile depuis le fut (311), une clé tubulaire pourvue de dents montée de manière amovible dans le fut (311) du support, **caractérisé en ce que** la clé tubulaire est verrouillée axialement par rapport au support et **en ce que** l'outil de dévissage comprend un outil anti-rotation apte à bloquer le rotor contre tout mouvement de rotation autour de son axe.

2. Outillage selon la revendication 1 dont l'outil anti-rotation comprend un élément tubulaire pourvu de chevilles, ledit élément tubulaire étant apte à être introduit à l'intérieur du rotor HP pour immobiliser ledit rotor en rotation.

3. Procédé de dévissage de l'écrou de liaison (20) du rotor HP (35) d'un turboréacteur à double corps, comportant une soufflante avant, un carter intermédiaire (7), un module HP avec un rotor HP et un module de turbine BP, le carter intermédiaire ayant un palier support du rotor HP, ledit rotor étant retenu dans le palier par l'écrou de liaison (20), le procédé après avoir démonté la soufflante et dégagé à l'avant l'accès à l'écrou est **caractérisé par le fait qu'**il comporte une étape de mise en place d'un outillage (300) de dévissage par l'avant de l'écrou de liaison selon la revendication 1 ou 2 et **par le fait que** les dents de la clé tubulaire (320) étant de forme complémentaire à celle des dents de l'écrou de liaison, le support (310) pour la clé tubulaire (320) est fixé sur le carter intermédiaire, et le rotor HP (35) étant calé en rotation, on applique un couple de dévissage sur ladite clé tubulaire (320).

4. Procédé selon la revendication 3, le module de turbine BP étant démonté, selon lequel on cale en rotation le rotor HP (35) par un élément tubulaire engagé dans l'espace dégagé par le module BP et fixé à une extrémité au carter du module HP et à l'autre extrémité rendu solidaire en rotation du rotor HP.

## Patentansprüche

1. Ausschraubwerkzeug, das zur Aufschrauben der Überwurfmutter des Rotors eines Motormoduls einer Gasturbine geeignet ist und das einen Träger (310) für einen Steckschlüssel (320) mit einem zylindrischen Hohlkörper (311) und vier Armen (312) umfasst, die sich sternförmig ab dem Hohlkörper (311) des Trägers erstrecken, **dadurch gekennzeichnet, dass** der Rohrschlüssel axial in Bezug auf den Träger verriegelt ist und dadurch, dass das Ausschraubwerkzeug ein Anti-Rotationswerkzeug umfasst, welches geeignet ist, den Rotor für Drehbewegungen um seine Achse zu blockieren.

2. Werkzeug gemäß Anspruch 1, dessen Anti-Rotationswerkzeug ein rohrförmiges und mit Dübeln bestücktes Element umfasst, wobei besagtes rohrförmiges Element geeignet ist, ins Innere des HD-Rotors eingeführt zu werden, um die Rotation des besagten Rotor zu immobilisieren.

3. Aufschraubverfahren der Überwurfmutter (20) des HD-Rotors (35) eines Zweistrom-Turbotriebwerks, der einen vorderen Mantelpropeller, ein dazwischen liegendes Gehäuse (7), ein HD-Modul mit einem HD-Rotor und ein ND-Turbinenmodul umfasst, wobei das dazwischen liegende Gehäuse ein Traglager des HD-Rotors besitzt, wobei besagter Rotor mit der Überwurfmutter (20) im Lager gehalten wird, wobei das Verfahren, nach Demontage des Propellers und Freilegung des Zugangs zur Mutter vorne, **dadurch gekennzeichnet ist, dass** es eine Einsatzetappe eines Werkzeugs (300) zum Aufschrauben, von vorne, der Mutter gemäß Anspruch 1 oder 2 umfasst, und dadurch, dass die Zähne des Steckschlüssels (320) einer den Zähnen der Überwurfmutter entsprechenden und einander vervollständigenden Form sind, dass der Träger (310) für den Steckschlüssel (320) auf dem Zwischengehäuse befestigt ist, und dass der HD-Rotor (35) rotationsgehemmt ist und dass auf den besagten Steckschlüssel (320) ein Aufschraub-Drehmoment angewendet wird.

4. Verfahren gemäß Anspruch 3, wobei bei demontiertem ND-Turbinenmodul der HD-Rotor (35) mit einem rohrförmigen Element rotationsgehemmt ist, welches in einen vom ND-Modul freigemachten Raum eingeführt wird und an einem Ende des Gehäuses des HD-Moduls befestigt wird und am anderen Ende rotationssolidarisch mit dem HD-Rotor ist.

## Claims

1. An unscrewing tooling adapted to unscrew the connecting nut of the rotor of a gas turbine engine module, comprising a support (310) for a tubular wrench (320) comprising a cylindrical barrel (311) and four branches (312) extending in a star shape from the barrel (311), a tubular wrench provided with teeth which is mounted removably in the barrel (311) of the support, **characterized in that** the tubular wrench is locked axially with respect to the support, and **in that** the unscrewing tooling comprises an anti-rotation tool adapted to block the rotor against any rotational movement about its axis.

2. The tooling as claimed in claim 1, in which the anti-rotation tool comprises a tubular element provided with wedges, said tubular element being adapted to be introduced inside the HP rotor to immobilize said rotor against rotation.

3. A method for unscrewing the connecting nut (20) of the HP rotor (35) of a twin-spool turbine, comprising a front fan, an intermediate casing (7), an HP module with an HP rotor and a LP turbine module, the intermediate casing having a bearing supporting the HP rotor, said rotor being retained in the bearing by the connecting nut (20), the method, after having removed the fan and released access to the nut from the front, is **characterized in that** it comprises a step of placing an unscrewing tooling (300) in front of the connecting nut as claimed in claim 1 or 2, and **in that** the teeth of the tubular wrench (320) having a shape which complements that of the teeth of the connecting nut, the support (310) for the tubular wrench (320) is fixed to the intermediate casing, and with the HP rotor (35) being prevented from rotating, an unscrewing torque is applied to said tubular wrench (320).

4. The method as claimed in claim 3, the LP turbine module being removed, in which the HP rotor (35) is prevented from rotating by a tubular element engaged in the space released by the LP module and fixed at one end to the casing of the HP module and at the other end secured in rotation with the HP rotor.
